Europäisches Patentamt

European Patent Office

Office européen des brevets

(11) Publication number : **0 511 793 A1**

# (12) EUROPEAN PATENT APPLICATION

(21) Application number : 92303727.9

(22) Date of filing : 24.04.92

(51) Int. Cl.⁵ : **B60R 16/02**

(30) Priority : **26.04.91 JP 97679/91**

(43) Date of publication of application :
**04.11.92 Bulletin 92/45**

(84) Designated Contracting States :
**DE FR GB**

(71) Applicant : **PIONEER ELECTRONIC CORPORATION**
No. 4-1, Meguro 1-chome
Meguro-ku Tokyo-to (JP)

(72) Inventor : **Go, Yasunao, c/o Pioneer Electronic Corp.**
Kawagoe Works, No. 25-1 Aza-Nishicho
Oaza-Yamada, Kawagoe-shi, Saitama-ken
(JP)

Inventor : **Ikata, Yoshikatsu, Pioneer Electronic Corp.**
Kawagoe Works, No. 25-1 Aza-Nishicho
Oaza-Yamada, Kawagoe-shi, Saitama-ken (JP)
Inventor : **Kimura, Toshiyuki, Pioneer Electronic Corp.**
Kawagoe Works, No. 25-1 Aza-Nishicho
Oaza-Yamada, Kawagoe-shi, Saitama-ken (JP)
Inventor : **Shimotsuma, Hiroshi, Pioneer Electronic Corp.**
Kawagoe Works, No. 25-1 Aza-Nishicho
Oaza-Yamada, Kawagoe-shi, Saitama-ken (JP)

(74) Representative : **Brunner, Michael John**
GILL JENNINGS & EVERY 53-64 Chancery
Lane
London WC2A 1HN (GB)

(54) **System for data communication on automobile.**

(57) A data communication system for use on a motor vehicle has at least one master unit and at least one slave unit which are connected to a communication bus. The master unit has a first memory for storing various items of data, a transfer controller for outputting a transfer control signal, and a first transfer unit for transferring data between the first memory and the slave unit based on the transfer control signal. The slave unit has a second memory for storing various items of data, and a second transfer for transferring data between the second memory and the master unit based on the transfer control signal. The transfer controller outputs a transfer control signal, and the first transfer unit transfers data between the first memory and the slave unit to update or refer to the data, based on the transfer control signal. The second transfer unit transfers data between the second memory and the master unit also based on the transfer control signal that has been outputted to the communication bus.

F I G. 1

## BACKGROUND OF THE INVENTION

Field of the Invention:

The present invention relates to a data communication system, and more particularly to a data communication system suitable for use in a network of components of an audiovisual system on an automobile.

Description of the Prior Art:

In recent years, automobile audio systems have been changing from systems which give the user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disc) player, etc., while the visual components include a TV (television) tuner, a navigation system, etc.. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

For the convenience of description, either one of the components connected to the communication bus is referred to as a "master unit" for controlling the overall network, where as each of the other components is referred to as a "slave unit".

After such an audiovisual system has been installed on an automobile, the user may want to update the version of a control program for the components of the system, or one of the components of the system may fail to function. In such occasions, the data stored in memories may have to be updated or referred to.

Heretofore, when the data stored in the memories of the components connected to the communication bus are to be read, or new data are to be written in those memories, the data should be read and written according to predetermined procedures with respect to the respective components. When a diagnostic unit is to be used, it has to be connected to a unit to be diagnosed, according to a predetermined procedure for that unit. It has been difficult to read data from and write data from memory areas other than those memory areas which are predetermined according to the specifications of the components.

## SUMMARY OF THE INVENTION

It is an object of the present invention to provide a data communication system for use on an automobile, which allows the data stored in all memory areas of memories of the components of the system to be updated or referred to.

According to the present invention, there is provided a data communication system for use on a motor vehicle, comprising a communication bus, at least one master unit connected to the communication bus, and at least one slave unit connected to the communication bus, the master unit having a first memory for storing various items of data, a transfer controller for outputting a transfer control signal, and a first transfer unit for transferring data between the first memory and the slave unit based on the transfer control signal, the slave unit having second memory for storing various items of data, and a second transfer unit for transferring data between the second memory and the master unit based on the transfer control signal.

The transfer controller outputs a transfer control signal. The first transfer unit transfers data between the first memory and the slave unit based on the transfer control signal. The second transfer unit transfers data between the second memory and the master unit based on the transfer control signal.

Since the master unit can transfer the data from the second memory to the first memory or transfer the data from the first memory to the second memory, it is possible for the master unit to update, refer to, or otherwise process the data stored in the second memory of the slave unit.

The data communication system can easily be diagnosed for a failure simply by connecting a diagnostic unit as a master unit to the communication unit.

The specifications of the slave unit and the version number of the control program thereof can easily be checked by confirming the data stored in and transferred from the second memory. While the data communication system is in operation, the data stored in the second memory can be checked for the confirmation of operation details of the slave unit.

The above and other objects, features and advantages of the present invention will become more apparent from the following description when taken in conjunction with the accompanying drawings in which preferred embodiments of the present invention shown by way of illustrative example.

## BRIEF DESCRIPTION OF THE DRAWINGS

FIG. 1 is a block diagram of a data communication system according to an embodiment of the present invention;

FIG. 2 is a block diagram of a power supply circuit for an audiovisual system as the data communication system;

FIG. 3 is a block diagram of the audiovisual system;

FIG. 4 is a block diagram of a control network of the audiovisual system;

FIG. 5 is a block diagram of a specific arrangement in which a master unit and a slave unit are connected to each other;

FIG. 6 is a block diagram of another specific arrangement in which a master unit and a slave unit are connected to each other;

FIG. 7 is a diagram of a transfer format of communication data;

FIG. 8 is a diagram of basic data formats;

FIG. 9 is a diagram of major classification data;

FIG. 10 is a diagram of subclassification data;

FIG. 11 is a diagram showing physical addresses;

FIG. 12 is a diagram showing physical addresses;

FIG. 13 is a diagram showing logical addresses;

FIG. 14 is a diagram illustrative of an example in which physical and logical addresses are assigned;

FIG. 15 is a flowchart of an operation process of a master unit;

FIG. 16 is a flowchart of an operation process of a slave unit;

FIG. 17 is a diagram showing a communication sequence by way of example;

FIG. 18 is a diagram showing another communication sequence by way of example;

FIG. 19 is a diagram showing still another communication sequence by way of example; and

FIG. 20 is a diagram showing the contents of a command CMD.

## DETAILED DESCRIPTION OF THE PREFERRED EMBODIMENTS

### GENERAL ARRANGEMENT OF DATA COMMUNICATION SYSTEM

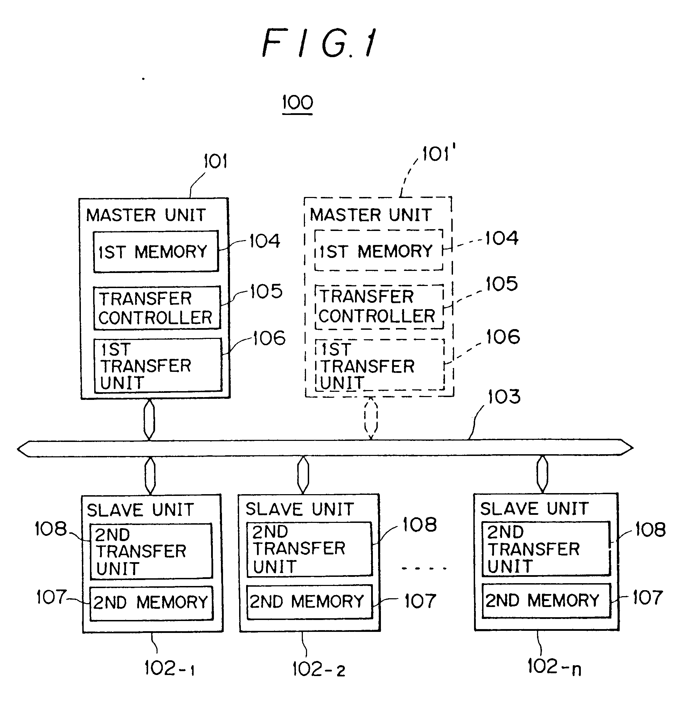

FIG. 1 schematically shows in block form a data communication system for use on an automobile according to an embodiment of the present invention.

The data communication system, generally designated by the reference numeral 100, comprises at least one master unit 101 (101') connected to a communication bus 103 and a plurality of slave units $102_{-1}$, $102_{-2}$, ..., $102_{-n}$ connected to the communication bus 103. The master unit 101 (101') has a first memory 104 for storing various items of data, a transfer controller 105 for outputting a transfer control signal, and a first transfer unit 106 for transferring data between the first memory 104 and the slave units $102_{-1}$, $102_{-2}$, ..., $102_{-n}$ based on the transfer control signal. Each of the slave units $102_{-1}$, $102_{-2}$, ..., $102_{-n}$ has a second memory 107 for storing various items of data, and a second transfer unit 108 for transferring data between the second memory 107 and the master unit 101 (101') based on the transfer control signal.

In operation, the transfer controller 105 outputs a transfer control signal.

The first transfer unit 106 transfers data between the first memory 104 and the slave units $102_{-1}$, $102_{-2}$,..., $102_{-n}$ based on the transfer control signal.

The second transfer unit 108 transfers data between the second memory 107 and the master unit 101 (101') based on the transfer control signal.

Therefore, it is possible for the master unit 100 (101') to update, refer to, or otherwise process the data stored in the second memory 107 of each of the slave units $102_{-1}$, $102_{-2}$, ..., $102_{-n}$.

### POWER SUPPLY OF AUDIOVISUAL SYSTEM

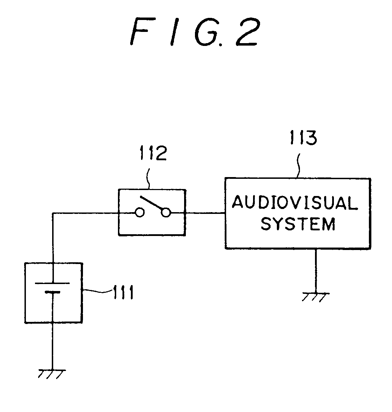

The principles of the present invention are particularly useful when embodied in an audiovisual (AV) system on an automobile as the data communication system. As shown in FIG. 2, the audiovisual system, denoted at 113, is supplied with electric energy from a battery 111 through an ACC switch 112. The ACC switch 112 is ganged with an engine start keyswitch of the automobile. When the engine key inserted in the engine start keyswitch is turned to the position of the ACC switch, the accessories on the automobile are energized by the battery 111. At the same time, the audiovisual system 113 is also energized by the battery 111.

### ARRANGEMENT OF AUDIOVISUAL SYSTEM

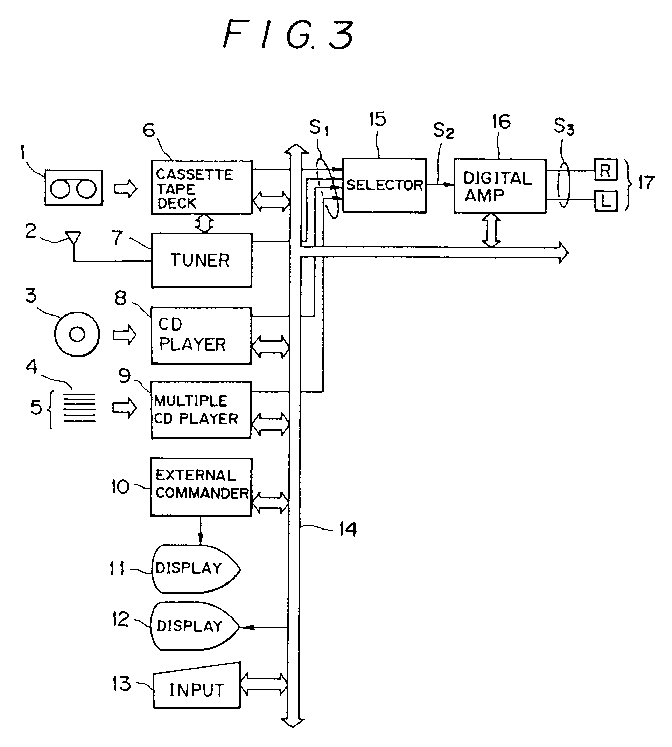

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

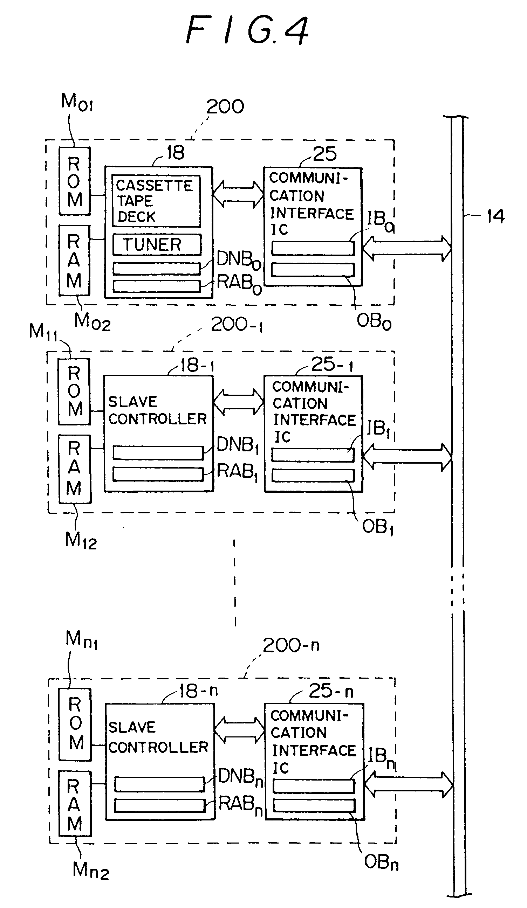

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals $S_1$ from the audio reproducing components are selectively applied through a selector 15 as a reproduced signal $S_2$ to a digital amplifier 16. After the reproduced signal $S_2$ has been amplified by the digital amplifier 16, it is applied as reproduced signals $S_3$ to loudspeakers 17 from which the reproduced sounds $S_3$ are radiated. The digital amplifier 16 contains a digital signal processing circuit which is controlled by a controller in the digital amplifier 16, the controller being connected to the communication bus 14.

*CONTROL NETWORK OF AUDIOVISUAL SYSTEM*

FIG. 4 shows the control network in detail. For the purpose of description, the audiovisual system components connected to the communication bus 14 as shown in FIG. 3 will hereinafter be referred to as "units". As shown in FIG. 4, these units are connected to the communication bus 14 parallel to each other. Either one of these units is selected as a "master" unit, indicated by 200, for controlling the control network, while the other units serve as "slave" units, indicated by $200_{-1} \sim 200_{-n}$. The master unit 200 has a master controller 18 connected through a communication interface IC 25 to the communication bus 14. The master controller 18 doubles as controllers for controlling the cassette tape deck 6 and the tuner 7. The slave units $200_{-1} \sim 200_{-n}$ have respective slave controllers $18_{-1} \sim 18_{-n}$ which are also connected to the communication bus 14 through respective communication interface ICs $25_{-1} \sim 25_{-n}$. ROMs $M_{01} \sim M_{n1}$ are connected respectively to the master controller 18 and the slave controllers $18_{-1} \sim 18_{-n}$, and RAMs $M_{02} \sim M_{n2}$, are also connected respectively to the master controller 18 and the slave controllers $18_{-1} \sim 18_{-n}$. The master controller 18 has a data number buffer $DNB_0$ and a RAM address buffer $RAB_0$. Similarly, the slave controllers $18_{-1} \sim 18_{-n}$ have respective data number buffers $DNB_1 \sim DNB_n$ and respective RAM address buffers $RAB_1 \sim RAB_n$. The communication interface 25 of the master unit 200 has an input buffer $IB_0$ and an output buffer $OB_0$. Similarly, the communication interface ICs $25_{-1} \sim 25_{-n}$ of the slave units $200_{-1} \sim 200_{-n}$ have respective input buffers $IB_1 \sim IB_n$ and respective output buffers $OB_1 \sim OB_n$.

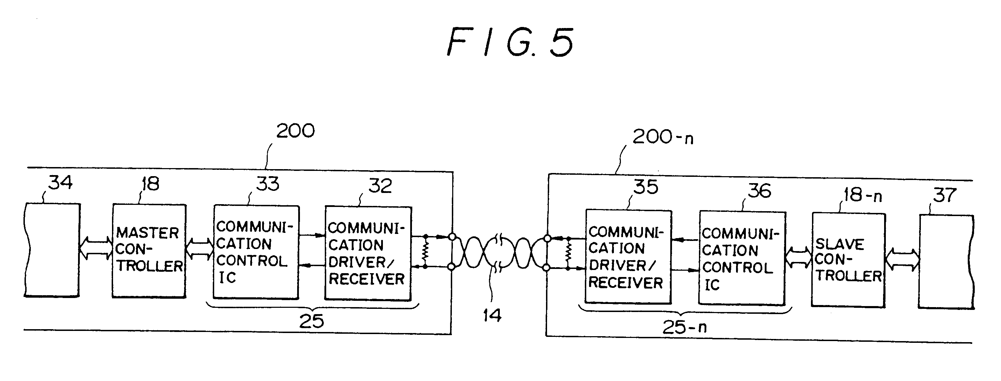

FIG. 5 shows a specific arrangement in which the master unit 200 and the slave unit $200_{-n}$ are connected to each other. The master unit 200 and the slave unit $200_{-n}$ are connected to each other by the communication bus 14. The communication bus 14 comprises a twisted pair of conductors or wires. Communication data DT transferred through the communication bus 14 is transmitted and received by the communication interface ICs 25, $25_{-n}$ of the master unit 200 and the slave unit $200_{-n}$, respectively. The communication interface IC 25 is divided into a communication driver/receiver 32 and a communication control IC 33. Likewise, the communication interface IC $25_{-n}$ is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

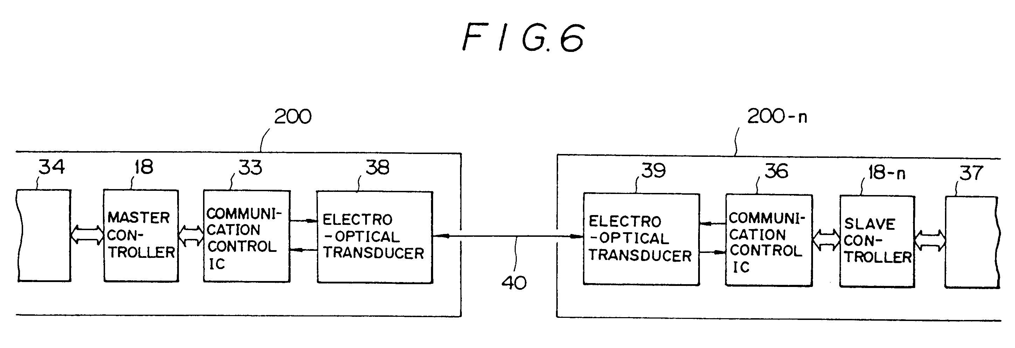

The communication interface IC 25, for example, which is divided into the communication control IC 33 and the communication driver/receiver 32, is capable of coping with different transmission mediums for the communication bus 14. In FIG. 5, the communication bus 14 is composed of a twisted pair of conductors or wires for differential transmission. If the communication bus 14 comprises an optical communication cable 40 as shown in FIG. 6, then the communication driver/receiver 32 shown in FIG. 5 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto from the communication bus 14, and replacing the malfunctioning communication driver/receiver 32 with a new one will restore the master unit 200. Consequently, the maintenance of the master unit 200 and also the slave unit $200_{-n}$ is relatively easy to carry out. The easy maintenance is particularly advantageous with audiovisual systems on automobiles because the master and slave units are exposed to and tend to be damaged by noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces $25_{-1} \sim 25_{-n}$ of the other slave units $200_{-1} \sim$

$200_{-n}$ is also divided into a communication control IC and a communication driver/receiver.

*TRANSMISSION FORMAT OF COMMUNICATION DATA DT*

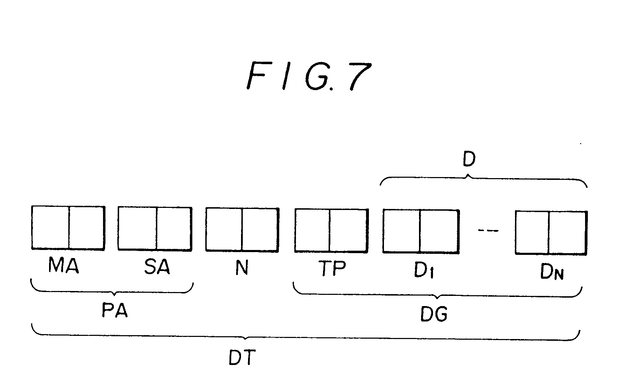

FIG. 7 shows a transfer format of the communication data DT. As shown in FIG. 7, the communication data DT comprises, from its leading end, master address data MA indicating the address of the master unit 200, slave address data SA indicating the addresses of the slave units $200_{-1} \sim 200_{-n}$, message length data N indicating the message length of data D, classification data TP indicating the type of the data D, and the data D itself which represents the contents to be transferred. A data group DG composed of the classification data TP and the data D is data that should be transferred in reality.

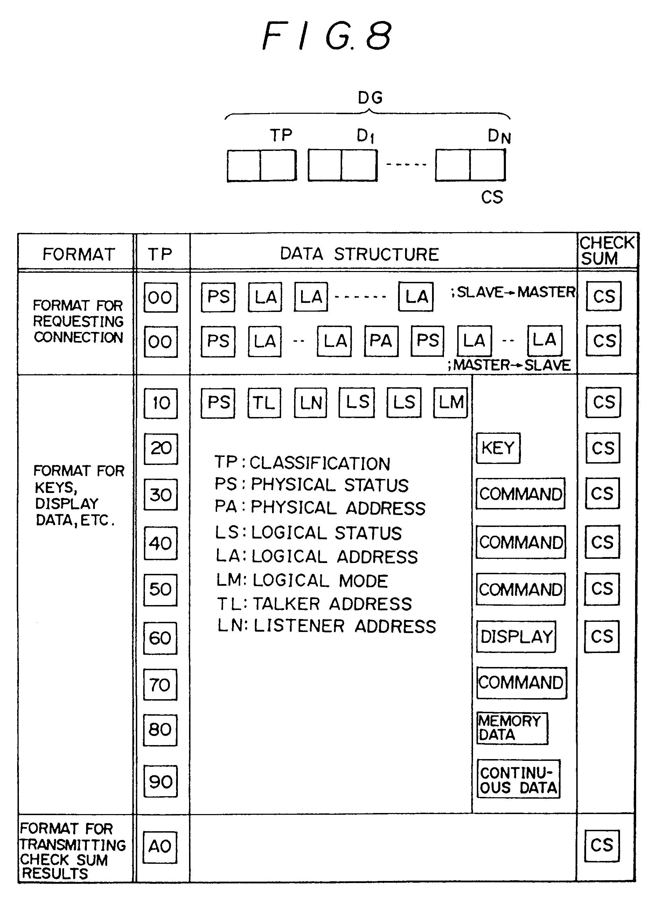

The arrangement of the data D varies depending on the contents of the communication data DT, i.e., the classification data TP. There are roughly three formats for the data D. As shown in FIG. 8, the first format is a format for requesting a connection, the second format is a format for keys and display data, and the third format is a format for transmitting the result of a check sum CS. In the format for keys and display data as shown in FIG. 8, data ranging from physical status data PS to logical mode data LM are all identical, and omitted from illustration.

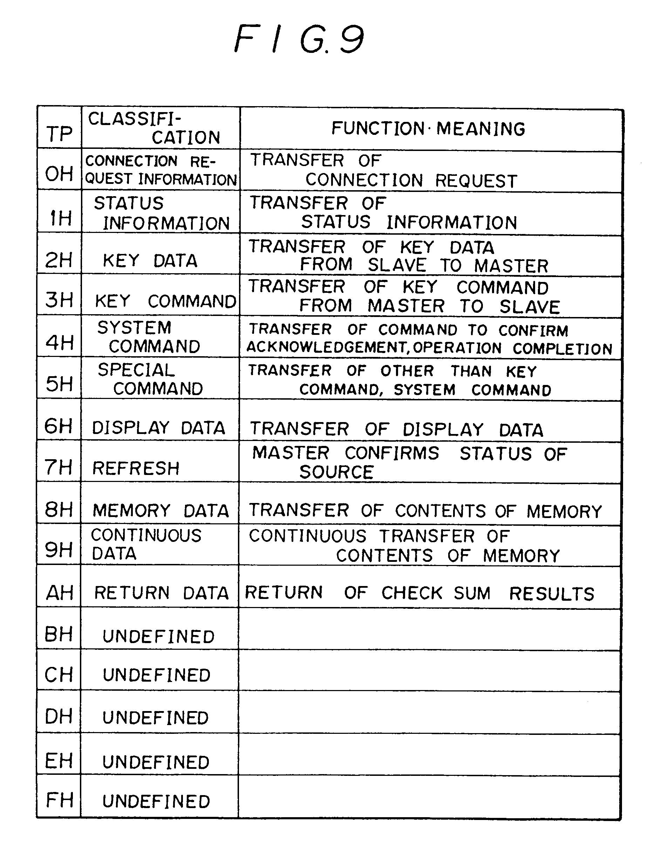

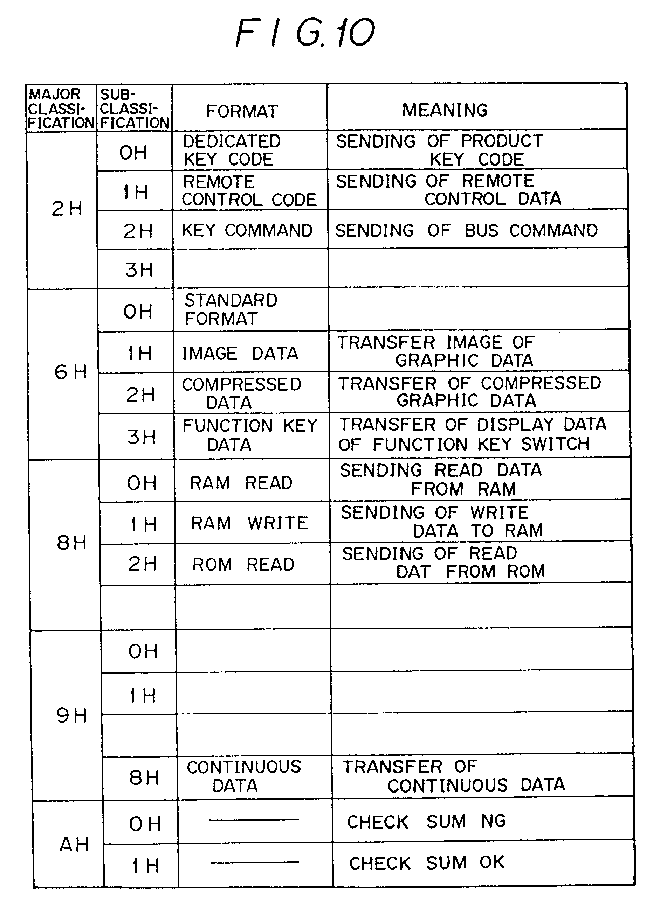

The classification data TP is positioned at the leading end of the communication data DT, and serves as a data area indicating the type of the data D following the classification data TP. The classification data TP is composed of major classification data and subclassification data. As shown in FIG. 9, the major classification data represents the type of the data D. If the entire classification data TP is of 8 bits, then the major classification data is allotted four high-order bits. As shown in FIG. 10, the subclassification data is mainly used to identify the format of the data D, and is allotted four low-order bits. For example, if the classification data TP is TP = "21H", then the four high-order bits are "2H" and mean that key data are to be transferred from the slave unit to the master unit, and the four low-order bits are "1H" and mean that the key data to be transferred is remote control data.

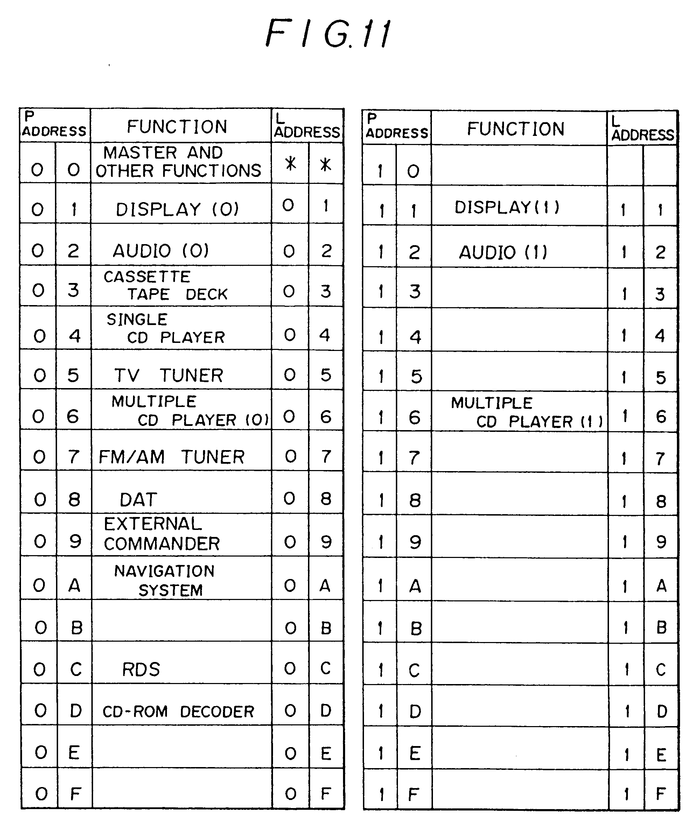

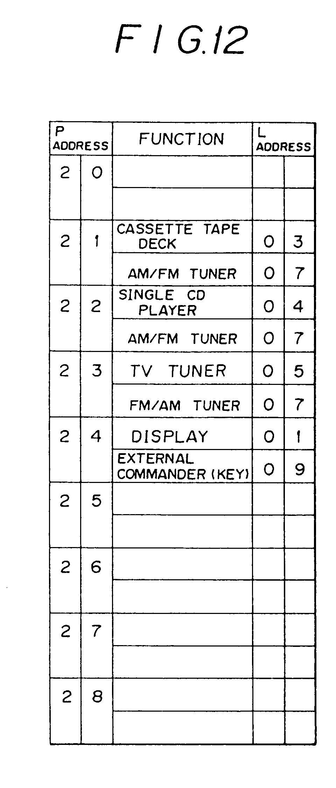

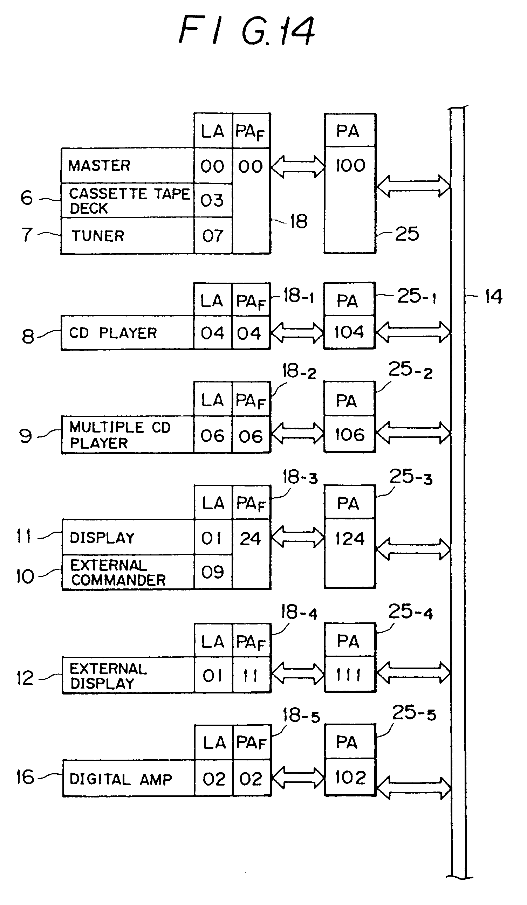

As illustrated in FIGS. 11 and 12, the physical address data PA represents communication addresses for specifying the communication interface ICs $25_{-1} \sim 25_{-n}$ of the master unit 200 and the slave units $200_{-1} \sim 200_{-n}$ on the communication bus 14, the addresses indicating the master unit 200 and the slave units $200_{-1} \sim 200_{-n}$. The physical address data PA for specifying the master unit 200 is fixed at all times. Basically, one unit is allotted one physical address data PA. FIG. 14 shows an example in which the units shown in FIG. 3 are allotted physical address data PA. In FIG.

14, the physical address data PA are established for the master and slave controllers $18 \sim 18_{-5}$. This is to take into account the fact that two functional elements, such as the cassette tape deck 6 and the tuner 7, are connected to one master controller 18, as with the master unit 200. If one controller is combined with one function, then the physical address data PA and the logical address data LA indicate the same address, as with the slave controllers $18_{-1}$ $18_{-2}$, $18_{-5}$.

The physical status data PS represents status information about the master unit 200 and the slave units $200_{-1} \sim 200_{-n}$, and is data indicative of the number of function addresses (i.e., the logical address data LA, described below) that the units have.

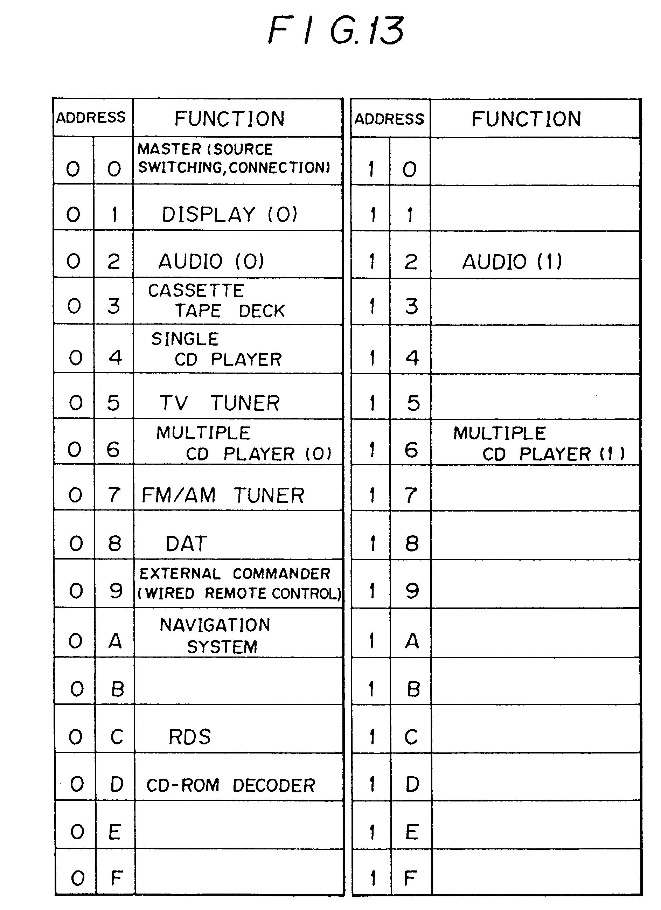

As shown in FIG. 13, the logical address data LA is data indicative of each of the functions (e.g., the tuner and the cassette tape deck) possessed by the master unit 200 and the slave units $200_{-1} \sim 200_{-n}$. The logical address data LA is assigned to each function. The number of logical address data LA is not fixed because there are as many logical address data LA (e.g., $LA_1$, $LA_2$, ...) as there are functions possessed by the controller that is determined by the physical address data PA. FIG. 14 also shows the logical address data LA assigned to the units shown in FIG. 3.

The talker address data TL indicates the address of a transmitting side (talker) which transmits the communication data DT. The listener address data LN indicates the address of a receiving side (listener) which receives the communication data DT. The logical status data LS represents the status of the function corresponding to each logical address LA. The logical mode data LM represents the operation status (mode) of the function corresponding to each logical address LA. The check sum data CS is added data for detecting an error to improve the reliability of the data D.

*MEMORY DATA TRANSFER*

The transfer of memory data between the master unit 200 and the slave units $200_{-1} \sim 200_{-n}$ will be described below.

A fundamental algorithm for a sequence for transferring image data in the data communication system according to the present invention is as follows:

For an easier understanding of the present invention, memory data transfer between the master unit 200 and the slave unit $200_{-n}$ will be described by way of example with reference to FIG. 4.

1) Transfer of data from the slave unit to the master unit:

    A1) The master controller 18 of the master unit 200 functions as the transfer control means to transmit communication data as the transfer control signal to the slave controller $18_n$ of the slave unit $200_{-n}$.

A2) Having received communication data as the transfer control signal, the slave controller $18_{-n}$ functions as the second transfer means to transfer data from the memory $M_{nx}$ (x = 1 or 2) functioning as the second memory means over the communication bus 14 to the master unit 200.

A3) The master controller 18 of the master unit 200 functions as the first transfer means to store the data transferred from the memory $M_{nx}$ of the slave unit $200_{-n}$ into the RAM $M_{02}$ which functions as the first memory means.

2) Transfer of data from the master unit to the slave unit:

B1) The master controller 18 of the master unit 200 functions as the transfer control means to transmit communication data as the transfer control signal to the slave controller $18_n$ of the slave unit $200_{-n}$ to which data is to be transferred. The master controller 18 also functions as the first transfer means to transmit data from the memory $M_{nx}$ as the first memory means over the communication bus 14 to the slave unit $200_{-n}$.

B2) Having received the communication data as the transfer control signal, the slave controller $18_{-n}$ functions as the second transfer means to store the data from the master unit 200 into the RAM $M_{n2}$ functioning as the second memory means.

The above communication sequence is stored as a control program in the controllers of the master unit 200 and the slave unit $200_{-n}$, and also the controllers of the slave units $200_{-1} \sim 200_{-n-1}$.

The data communication system according to the present invention will be described in greater detail with reference to FIGS. 4, 15 through 17. For diagnosing the data stored in the RAM $M_{n2}$ of the slave unit $200_{-n}$, the master unit 200 transfers 4-byte data from an memory address "0105H" of the RAM $M_{n2}$ of the slave unit $200_{-n}$ to the RAM $M_{02}$ of the master unit 200.

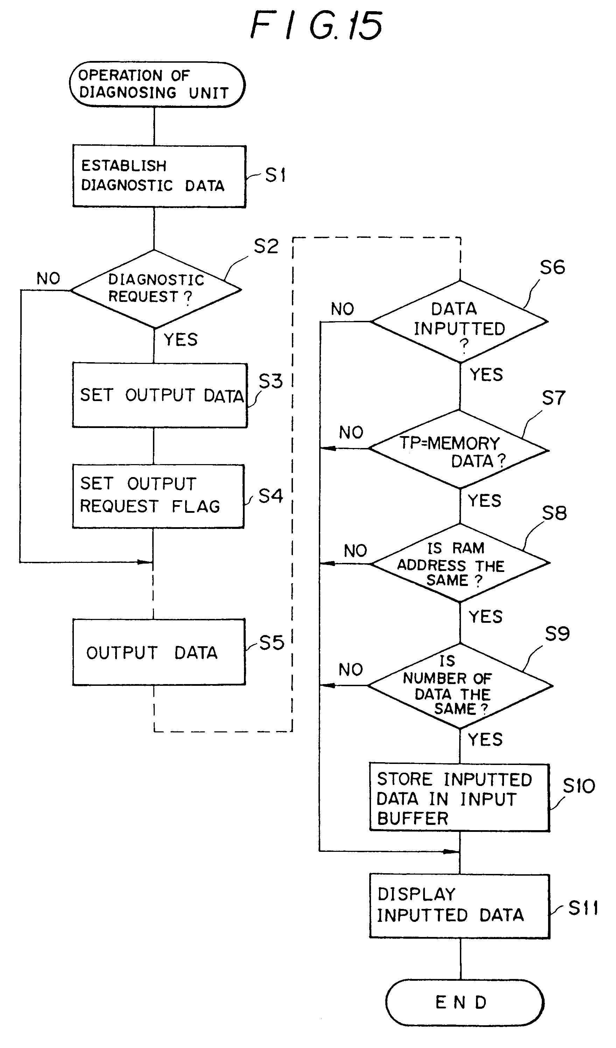

FIG. 15 shows an operation process of the master controller 18 which functions as both the transfer control means and the first transfer means.

The user of the data communication system operates on the input unit 13 (see FIG. 3), which may be a keyboard or the like, to indicate or establish data for specifying the slave unit to be diagnosed, an address of the memory of the slave unit, a number of items of data to be read, and a diagnostic request in a step S1.

Thereafter, the master controller 18 determines whether there is a diagnostic request or not in a step S2. Since there is a diagnostic request, the master controller 18 stores communication data to be outputted, in the output buffer $OB_0$ in a step S3. If there is no diagnostic request, the master controller 18 carries out other ordinary operation.

The master controller 18 sets an output request flag in order to cause an output processing routine to recognize that there is communication data to be outputted, in a step S4.

In the output processing routine, the master unit 200 transmits the communication data to the slave unit $200_{-n}$ to be diagnosed, in a step S5. Then, the master unit 200 is kept in a standby condition, waiting for communication data.

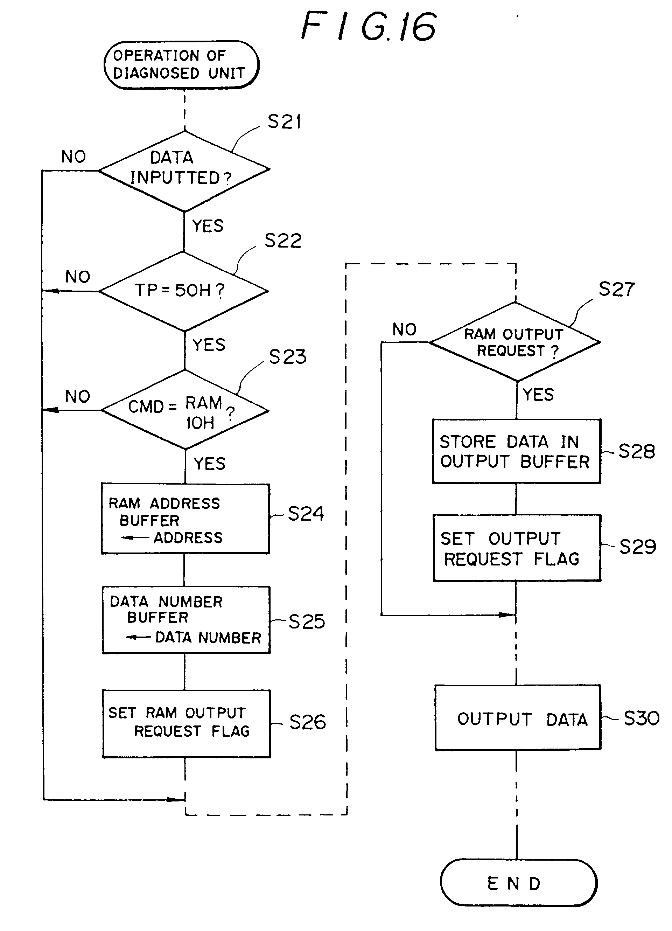

An operation process of the slave unit $200_{-n}$ to be diagnosed will be described below with reference to FIG. 16.

The slave controller $18_{-n}$ of the slave unit $200_{-n}$ functions as the second transfer means to determine whether there is communication data inputted, in a step S21.

If no communication data is inputted, then the slave controller $18_{-n}$ carries out other ordinary operation.

If there is communication data inputted, then the slave controller $18_{-n}$ determines whether the communication data is classification data TP = "50H", i.e., a special command, or not in a step S22.

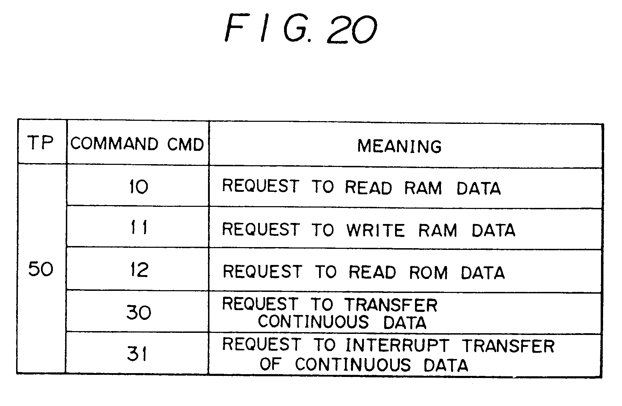

If the communication data is a special command, then the slave controller $18_{-n}$ determines whether the communication data represents a request for reading data from the RAM based on a command CMD of the communication data, i.e., whether the command CMD is "10H" (see FIG. 20) or not, in a step S23.

If the communication data represents a request for reading data from the RAM, then the slave controller $18_{-n}$ stores, in the RAM address buffer $RAB_n$, "0105H" as a reading start address based on low and high address data ADL, ADH of the communication data, in a step S24.

The slave controller $18_{-n}$ also stores, in the data number buffer $DNB_n$, "04H" as the number of data items requested based on the number n of data items to be transferred, in a step S25.

In order to cause the output processing routine to recognize that there is a request for outputting RAM data, the slave controller $18_{-n}$ sets a RAM data output request flag in a step S26.

Thereafter, the slave controller $18_{-n}$ determines whether there is a RAM data output request in a step S27. Since the RAM data output request flag has been set, the slave controller $18_{-n}$ stores RAM data in the output buffer $OB_n$ in a step S28, and sets an output request flag in order to cause the output processing routine to recognize the output request flag in a step S29. If there is no RAM data output request, the slave controller $18_{-n}$ carries out other ordinary operation.

When it becomes possible to output the data, the slave controller $18_{-n}$ transmits the RAM data stored in the output buffer $OB_n$ over the communication bus 14 in a step S30.

Referring back to FIG. 15, the master controller 18 determines whether data is transmitted from the

slave unit $200_n$ or not in a step S6. If data is transmitted from the slave unit $200_n$, then the master controller 18 determines whether the transmitted data is RAM data or not based on the classification data TP in a step S7. Specifically, if the classification data TP = "80H", then since the transmitted data is RAM data (see FIG. 10), the master controller 18 determines whether the address of the transmitted RAM data is the same as the RAM address of the RAM data has been requested to be transmitted, in a step S8.

If the address of the transmitted RAM data is the same as the RAM address of the requested RAM data, then the master controller 18 determines whether the number of transmitted data items is the same as the number of requested data items in a step S9.

If the number of transmitted data items is the same as the number of requested data items, then the transmitted data items are stored in the input buffer $IB_0$ in a step S10.

When it becomes possible to display the transmitted RAM data, the master controller 18 displays the transmitted RAM data on a display unit (not shown) in a step S11. Thereafter, control comes to an end.

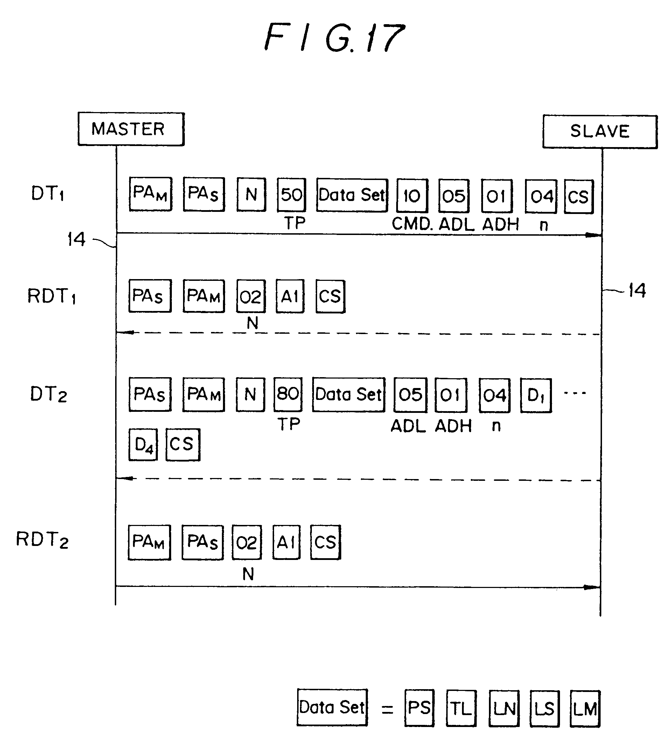

A communication sequence or a process of transferring data for diagnostic display will be described below with reference to FIG. 17.

In FIG. 17, the master unit 200 issues and transmits communication data $DT_1$ through the communication bus 14 to the slave unit in order to request the transfer of RAM data. The communication data $DT_1$ includes physical address data $PA_M$ of the master unit, physical address data $PA_S$ of the slave unit, message length data N indicating the number of data items to be transmitted, classification data TP = "50H" indicating a request for the transmission of memory data, physical status data PS, talker address data TL, listener address data LN, logical status data LS, logical mode data LM, command data CMD = "10H" indicating a request for reading RAM data, low-order address data ADL = "05H" and high-order address data ADH = "01H" of two bytes of the RAM memory address, transfer data number data n = "04H" indicating that the number of data items to be read is 4, and check sum data CS.

Upon reception of the communication data $DT_1$, the slave unit $200_n$ recognizes that the master unit 200 is requesting RAM data. To indicate that the slave unit $200_n$ has received the communication data $DT_1$, the slave unit $200_n$ transmits return data $RDT_1$ back to the master unit 200.

Then, the slave unit $200_n$ reads the number of stored data items, which have been indicated by the transmitted memory address, from the RAM $M_{n2}$ thereof, and transmits communication data $DT_2$ to the master unit 200.

The communication data $DT_2$ includes physical address data $PA_S$ of the slave unit, physical address data $PA_M$ of the master unit to which the communication data is to be transmitted, message length data N indicating the number of data items to be transmitted, classification data TP = "80H" indicating the transmission of memory data, physical status data PS, talker address data TL, listener address data LN, logical status data LS, logical mode data LM, low-order address data ADL = "05H" and high-order address data ADH = "01H" of two bytes of the RAM memory address, transfer data number data n = "04H" indicating that the number of data items to be read is 4, four memory data $D_1 \sim D_4$, and check sum data CS.

To indicate that the master unit 200 has received the communication data $DT_2$, the master unit 200 transmits return data $RDT_2$ back to the slave unit $200_n$.

The RAM data has been transferred in the above example. However, ROM data can also be transferred by using a command CMD = "12H" (see FIG. 20).

While only the reading of memory data has been described above, data from the master unit can also be written in the RAM of the slave unit by using a command CMD = "11H".

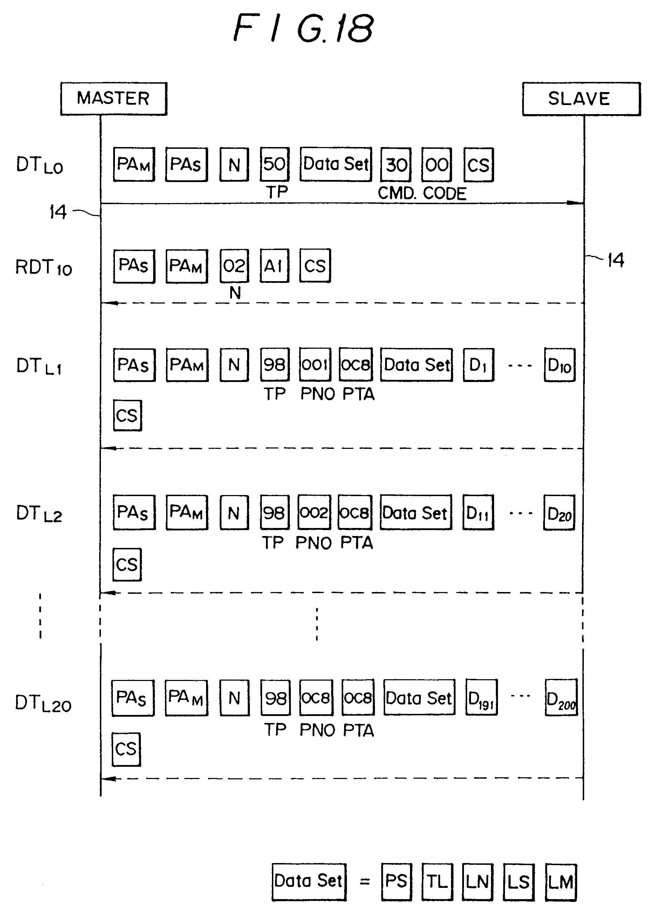

Another communication sequence will be described below with reference to FIG. 18. According to the communication sequence shown in FIG. 18, it is possible to transfer a large amount of data between the master and slave units. In FIG. 18, the return data that is transmitted from the master unit back to the salve units when data from the memories are transferred is omitted from illustration.

In FIG. 18, the master unit 200 issues and transmits communication data $DT_{LO}$ through the communication bus 14 to the slave unit in order to request the transfer of a large amount of data. The communication data $DT_{LO}$ includes physical address data $PA_M$ of the master unit, physical address data $PA_S$ of the slave unit, message length data N indicating the number of data items to be transmitted, classification data TP = "50H" indicating a request for the transmission of memory data, physical status data PS, talker address data TL, listener address data LN, logical status data LS, logical mode data LM, command data CMD = "30H" (see FIG. 20) indicating a request for reading memory data from a memory area, code data CODE = "00H" indicating the transfer of all data from the memory area, and check sum data CS.

Upon reception of the communication data $DT_{LO}$, the slave unit recognizes that the master unit 200 is requesting memory data from the memory area. To indicate that the slave unit $200_n$ has received the request, the slave unit transmits return data $RDT_{LO}$ back to the master unit 200.

Then, the slave unit reads the number of stored data items (10 data items in FIG. 18), which can be transmitted with one communication data set, from the memory area of the RAM whose beginning end is indicated by the command data. The slave unit transmits communication data $DT_{L1}$ including the read data items to the master unit 200. The ten data items read from the RAM and transmitted to the master unit 200 will be referred to as a packet.

The communication data $DT_{L1}$ includes physical address data $PA_S$ of the slave unit, physical address data $PA_M$ of the master unit, message length data N indicating the number of data items to be transmitted, classification data TP = "98H" (see FIG. 10) indicating the transmission of memory data from a memory area, packet data number data PNO = "001H" indicating that the packet number of the data being transmitted is 1, packet number data PTA = "0C8H" indicating that the total number of packets to be transmitted is 200, physical status data PS, talker address data TL, listener address data LN, logical status data LS, logical mode data LM, memory data $D_1 \sim D_{10}$, and check sum data CS.

Likewise, data indicated by the packet numbers ranging from 2 to 200 are transferred with communication data $DT_{L2} \sim DT_{L20}$. Thereafter, the communication sequence is finished.

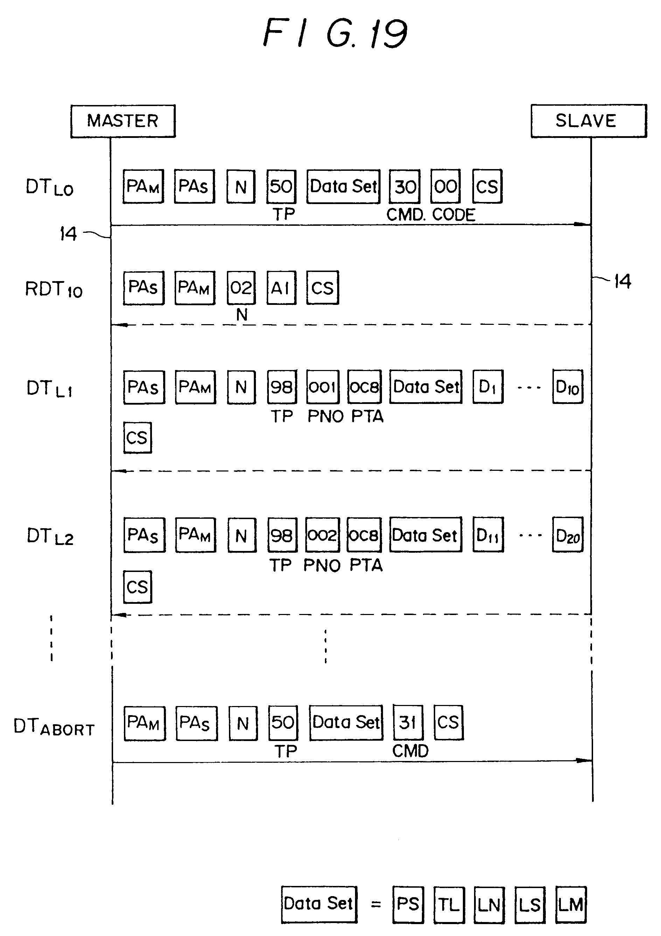

When the master unit is to interrupt the transfer of memory data, the master unit issues and transmits communication data $DT_{ABORT}$ over the communication bus 14 to the slave unit as shown in FIG. 19. The communication data $DT_{ABORT}$ includes physical address data $PA_M$ of the master unit, physical address data $PA_S$ of the slave unit, message length data N indicating the number of data items to be transmitted, classification data TP = "50H" indicating a request for the transmission of memory data, physical status data PS, talker address data TL, listener address data LN, logical status data LS, logical mode data LM, command data CMD = "31H" (see FIG. 20) indicating a request for the interruption of the transmission of reading, and check sum data CS.

The slave unit now interrupts the transfer of the memory data.

In the above embodiments, the master unit requests the slave unit to transfer memory data. However, the data communication system may be arranged to cause any one of the slave units to request the transfer of memory data from the master unit, or to cause the salve units to transfer memory data therebetween. In the former case, the slave unit which request the transfer of memory data from the master unit functionally serves as a master unit, and the master unit as a slave unit. In the latter case, one of the slave units functionally serves as a master unit, and the other slave units as slave units.

While the master unit which has already been connected to the communication bus requests the transmission of memory data from the slave unit in the above embodiments, a master unit as a diagnostic unit may newly be connected to the communication bus, and operate for the transfer of memory data.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A data communication system for use on a motor vehicle, comprising:
   a communication bus;
   at least one master unit connected to said communication bus; and
   at least one slave unit connected to said communication bus;
   said master unit having first memory means for storing various items of data, transfer control means for outputting a transfer control signal, and first transfer means for transferring data between said first memory means and said slave unit based on the transfer control signal;
   said slave unit having second memory means for storing various items of data, and second transfer means for transferring data between said second memory means and said master unit based on the transfer control signal.

2. A data communication system according to claim 1, wherein said transfer control means comprises data transfer requesting means for producing a transfer control signal to request the data to be transferred from said second memory means to said first memory means.

3. A data communication system according to claim 1, wherein each of said first and second transfer means comprises means for dividing a plurality of items of data into groups of n items (n is an integer of 2 or more) of data, and transferring one group at a time.

4. A data communication system according to claim 1, wherein each of said first and second transfer means comprises means for transferring data indicative of an address where the data to be transferred is stored in the first and second memory means, and data indicative of the number of items of data to be transferred, before the data is transferred.

5. A data communication system according to claim 1, wherein each of said first and second transfer means comprises buffer means for temporarily storing the data which is to be transferred or has been transferred.

6. A data communication system according to claim 2, wherein each of said first and second transfer means comprises means for dividing a plurality of items of data into groups of n items (n is an integer of 2 or more) of data, and transferring one group at a time.

7. A data communication system according to claim 4, wherein each of said first and second transfer means includes address memory means for storing data indicative of an address where the data that is to be transferred or has been transferred is stored in the first and second memory means.

8. A data communication system according to claim 4, wherein each of said first and second transfer means includes data number memory means for storing data indicative of the number of items of data that are to be transferred or have been transferred.

# F I G. 1

100

# F I G. 2

# F I G. 3

# F I G. 4

F I G. 5

FIG.6

# FIG. 7

# F I G. 8

| FORMAT | TP | DATA STRUCTURE | CHECK SUM |
|---|---|---|---|
| FORMAT FOR REQUESTING CONNECTION | 00 | PS  LA  LA ------ LA   ;SLAVE→MASTER | CS |
| | 00 | PS  LA -- LA  PA  PS  LA -- LA   ;MASTER→SLAVE | CS |
| FORMAT FOR KEYS, DISPLAY DATA, ETC. | 10 | PS  TL  LN  LS  LS  LM | CS |
| | 20 | TP: CLASSIFICATION    KEY | CS |
| | 30 | PS: PHYSICAL STATUS    COMMAND | CS |
| | 40 | PA: PHYSICAL ADDRESS    COMMAND | CS |
| | 50 | LS: LOGICAL STATUS   LA: LOGICAL ADDRESS    COMMAND | CS |
| | 60 | LM: LOGICAL MODE   TL: TALKER ADDRESS    DISPLAY | CS |
| | 70 | LN: LISTENER ADDRESS    COMMAND | |
| | 80 | MEMORY DATA | |
| | 90 | CONTINUOUS DATA | |
| FORMAT FOR TRANSMITTING CHECK SUM RESULTS | AO | | CS |

17

# F I G. 9

| TP | CLASSIFI-CATION | FUNCTION·MEANING |
|---|---|---|
| OH | CONNECTION RE-QUEST INFORMATION | TRANSFER OF CONNECTION REQUEST |
| 1H | STATUS INFORMATION | TRANSFER OF STATUS INFORMATION |
| 2H | KEY DATA | TRANSFER OF KEY DATA FROM SLAVE TO MASTER |
| 3H | KEY COMMAND | TRANSFER OF KEY COMMAND FROM MASTER TO SLAVE |
| 4H | SYSTEM COMMAND | TRANSFER OF COMMAND TO CONFIRM ACKNOWLEDGEMENT, OPERATION COMPLETION |
| 5H | SPECIAL COMMAND | TRANSFER OF OTHER THAN KEY COMMAND, SYSTEM COMMAND |
| 6H | DISPLAY DATA | TRANSFER OF DISPLAY DATA |
| 7H | REFRESH | MASTER CONFIRMS STATUS OF SOURCE |
| 8H | MEMORY DATA | TRANSFER OF CONTENTS OF MEMORY |
| 9H | CONTINUOUS DATA | CONTINUOUS TRANSFER OF CONTENTS OF MEMORY |
| AH | RETURN DATA | RETURN OF CHECK SUM RESULTS |
| BH | UNDEFINED | |
| CH | UNDEFINED | |
| DH | UNDEFINED | |
| EH | UNDEFINED | |
| FH | UNDEFINED | |

# F I G. 10

| MAJOR CLASSI- FICATION | SUB- CLASSI- FICATION | FORMAT | MEANING |
|---|---|---|---|
| 2 H | OH | DEDICATED KEY CODE | SENDING OF PRODUCT KEY CODE |
| | 1H | REMOTE CONTROL CODE | SENDING OF REMOTE CONTROL DATA |
| | 2H | KEY COMMAND | SENDING OF BUS COMMAND |
| | 3H | | |
| 6 H | OH | STANDARD FORMAT | |
| | 1H | IMAGE DATA | TRANSFER IMAGE OF GRAPHIC DATA |
| | 2H | COMPRESSED DATA | TRANSFER OF COMPRESSED GRAPHIC DATA |
| | 3H | FUNCTION KEY DATA | TRANSFER OF DISPLAY DATA OF FUNCTION KEY SWITCH |
| 8H | OH | RAM READ | SENDING READ DATA FROM RAM |
| | 1H | RAM WRITE | SENDING OF WRITE DATA TO RAM |
| | 2H | ROM READ | SENDING OF READ DAT FROM ROM |
| | | | |
| 9H | OH | | |
| | 1H | | |
| | | | |
| | 8H | CONTINUOUS DATA | TRANSFER OF CONTINUOUS DATA |
| AH | OH | ———— | CHECK SUM NG |
| | 1H | ———— | CHECK SUM OK |

# F I G.11

| P ADDRESS | | FUNCTION | L ADDRESS | | P ADDRESS | | FUNCTION | L ADDRESS | |
|---|---|---|---|---|---|---|---|---|---|
| O | O | MASTER AND OTHER FUNCTIONS | * | * | 1 | O | | | |
| O | 1 | DISPLAY (O) | O | 1 | 1 | 1 | DISPLAY(1) | 1 | 1 |
| O | 2 | AUDIO (O) | O | 2 | 1 | 2 | AUDIO (1) | 1 | 2 |
| O | 3 | CASSETTE TAPE DECK | O | 3 | 1 | 3 | | 1 | 3 |
| O | 4 | SINGLE CD PLAYER | O | 4 | 1 | 4 | | 1 | 4 |
| O | 5 | TV TUNER | O | 5 | 1 | 5 | | 1 | 5 |
| O | 6 | MULTIPLE CD PLAYER (O) | O | 6 | 1 | 6 | MULTIPLE CD PLAYER (1) | 1 | 6 |
| O | 7 | FM/AM TUNER | O | 7 | 1 | 7 | | 1 | 7 |
| O | 8 | DAT | O | 8 | 1 | 8 | | 1 | 8 |
| O | 9 | EXTERNAL COMMANDER | O | 9 | 1 | 9 | | 1 | 9 |
| O | A | NAVIGATION SYSTEM | O | A | 1 | A | | 1 | A |
| O | B | | O | B | 1 | B | | 1 | B |
| O | C | RDS | O | C | 1 | C | | 1 | C |
| O | D | CD-ROM DECODER | O | D | 1 | D | | 1 | D |
| O | E | | O | E | 1 | E | | 1 | E |
| O | F | | O | F | 1 | F | | 1 | F |

# F I G.12

| P ADDRESS | | FUNCTION | L ADDRESS | |
|---|---|---|---|---|
| 2 | 0 | | | |
| | | | | |
| 2 | 1 | CASSETTE TAPE DECK | 0 | 3 |
| | | AM/FM TUNER | 0 | 7 |
| 2 | 2 | SINGLE CD PLAYER | 0 | 4 |
| | | AM/FM TUNER | 0 | 7 |
| 2 | 3 | TV TUNER | 0 | 5 |
| | | FM/AM TUNER | 0 | 7 |
| 2 | 4 | DISPLAY | 0 | 1 |
| | | EXTERNAL COMMANDER (KEY) | 0 | 9 |
| 2 | 5 | | | |
| | | | | |
| 2 | 6 | | | |
| | | | | |
| 2 | 7 | | | |
| | | | | |
| 2 | 8 | | | |
| | | | | |

# F I G.13

| ADDRESS | | FUNCTION | ADDRESS | | FUNCTION |
|:---:|:---:|:---:|:---:|:---:|:---:|
| O | O | MASTER (SOURCE SWITCHING, CONNECTION) | 1 | O | |
| O | 1 | DISPLAY (0) | 1 | 1 | |
| O | 2 | AUDIO (0) | 1 | 2 | AUDIO (1) |
| O | 3 | CASSETTE TAPE DECK | 1 | 3 | |
| O | 4 | SINGLE CD PLAYER | 1 | 4 | |
| O | 5 | TV TUNER | 1 | 5 | |
| O | 6 | MULTIPLE CD PLAYER (0) | 1 | 6 | MULTIPLE CD PLAYER (1) |
| O | 7 | FM/AM TUNER | 1 | 7 | |
| O | 8 | DAT | 1 | 8 | |
| O | 9 | EXTERNAL COMMANDER (WIRED REMOTE CONTROL) | 1 | 9 | |
| O | A | NAVIGATION SYSTEM | 1 | A | |
| O | B | | 1 | B | |
| O | C | RDS | 1 | C | |
| O | D | CD-ROM DECODER | 1 | D | |
| O | E | | 1 | E | |
| O | F | | 1 | F | |

# F I G.14

# F I G. 15

# F I G.16

# F I G. 17

# F I G.18

# F I G. 19

$DT_{L0}$ | PA_M | PA_S | N | 50 | Data Set | 30 | 00 | CS
(TP) (CMD. CODE)

14

$RDT_{10}$ | PA_S | PA_M | 02 | AI | CS
(N)

14

$DT_{L1}$ | PA_S | PA_M | N | 98 | 001 | 0C8 | Data Set | $D_1$ ... $D_{10}$
(TP PNO PTA)
CS

$DT_{L2}$ | PA_S | PA_M | N | 98 | 002 | 0C8 | Data Set | $D_{11}$ ... $D_{20}$
(TP PNO PTA)
CS

$DT_{ABORT}$ | PA_M | PA_S | N | 50 | Data Set | 31 | CS
(TP) (CMD)

Data Set = PS TL LN LS LM

# F I G. 20

| TP | COMMAND CMD | MEANING |
|---|---|---|
| 50 | 10 | REQUEST TO READ RAM DATA |
| | 11 | REQUEST TO WRITE RAM DATA |
| | 12 | REQUEST TO READ ROM DATA |
| | 30 | REQUEST TO TRANSFER CONTINUOUS DATA |
| | 31 | REQUEST TO INTERRUPT TRANSFER OF CONTINUOUS DATA |

**European Patent Office**

# EUROPEAN SEARCH REPORT

Application Number

EP 92 30 3727

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 039 113 (B.L. CARS) | 1,2 | B60R16/02 |
| Y | * the whole document * | 3-8 | |
| | --- | | |
| Y | EP-A-0 165 600 (CONVEX) | 3-8 | |
| | * page 4, paragraph 1 * | | |
| | --- | | |
| A | EP-A-0 396 090 (THOMSON) | 1-3,6 | |
| | * claims 1-4 * | | |
| | ----- | | |
| | | | **TECHNICAL FIELDS SEARCHED (Int. Cl.5)** |
| | | | B60R |

The present search report has been drawn up for all claims

| Place of search | Date of completion of the search | Examiner |
|---|---|---|
| THE HAGUE | 12 AUGUST 1992 | GILL S.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)